# EUROPEAN PATENT APPLICATION

(11) **EP 4 659 584 A1**
(43) Date of publication of application: **10.12.2025**
(21) Application number: 24020181.4
(22) Date of filing: 05.06.2024
(51) Int. Cl.: A21D 13/04, A21D 13/066, A21D 13/36, A23L 25/00

(54) **CANNOLO OF CIALDA BASED ON DRIED FRUIT AND PRODUCTION METHOD**

(71) Applicant: Etnadolce S.r.l. P.iva 04144640879, 95030 Ragalna (CT) (IT)
(72) Inventor: Messina, Lorena, 95030 RAGALNA (CT) (IT)
(74) Representative: Randazzo, Luigi

(57) **Abstract**

The invention is applicable to the field of the food industry and, more particularly, of confectionery products, and aims to provide a gluten-free cannolo of cialda based on dried fruit, and specifically, a naturally gluten-free cannolo, based on almonds or other type of dried fruit. The invention also refers to the production method of the said cannolo of cialda based on dried fruit. The objective of the present invention is, therefore, to provide a gluten-free high quality pastry product, which has optimal properties in terms of sensorial and nutritional qualities and in terms of palatability, structure, shelf life, together with the corresponding production method.

## Description

### • TECHNICAL FIELD

The invention is applicable to the field of the food industry and, in particular, of confectionery products, and aims to provide a gluten-free cannolo based on cialda of dried fruit, and specifically, a naturally gluten-free cannolo, based on almonds or other type of dried fruit.

The invention, also, refers to the production method for making said gluten-free cannolo of cialda based on dried fruit.

### • BACKGROUND ART

It is known that, at an industrial level, the cialda for cannoli are mainly composed of wheat flour, animal fats (lard-butter), eggs, sugar and natural flavourings.

The cialda of the well-known Sicilian cannoli is produced by mixing the aforementioned ingredients from which a dough is obtained, subsequently rolled out (manually or using a sheeter), cut into the shape of a circumference, rolled into cylindrical molds and finally cooked in a fryer.

In this preparation, the cannolo is cold processed before being fried.

In particular, after being rolled out, the dough is cut into discs of dough, which are wrapped in the cannoli mold and then fried.

The cialda, once cooked and expelled from the molds, are crunchy and crumbly, ready to be filled.

The cialda in the shape of the well-known cannoli can be of different lengths and widths, but their shape remains substantially identical. In fact, this preparation system allows, simply by changing the cylindrical molds, to obtain light, crunchy and crumbly waffles in a wide variety of sizes.

The cialda for cannoli made from identical ingredients, mixed in different proportions, are also used for other types of confectionery products and can take on a different shape and consistency.

For example, cannoncino-shaped puff pastry cialda, which are less crunchy and more crumbly than the well-known Sicilian cannoli cialda, or other types of tube-shaped waffles, whose primary ingredient is wheat flour.

In the known art, therefore, the cialda of the type used to make cannoli are composed of wheat flour.

Therefore, known type cialdas are not suitable for the production of confectionery products for celiacs or consumers with gluten intolerances.

Celiac disease, or permanent gluten intolerance, is one of the most widespread food intolerances that affect the small intestine.

In subjects who suffer from this intolerance, the intake of foods containing gluten determines an immune reaction at the level of the small intestine, giving rise to chronic inflammation which results in the disappearance of the intestinal villi, accompanied by symptoms that vary from case to case. random. The flattened intestinal surface reduces or prevents the absorption of nutrients, such as proteins, fats, carbohydrates, vitamins and mineral salts, causing malnutrition and imbalances.

In Italy, celiac disease is recognized as a social disease, so much so that it is estimated that it affects approximately 400/600,000 Italians, that is, one person for every 100/150 inhabitants. Given that many subjects live with this condition for many years without experiencing particularly serious disorders, the number of diagnosed cases (around 160 thousand in 2012) is much lower than the real incidence of the pathology.

The data is to be considered in line with the European average, even if, analyzing the data country by country, it is possible to note that in States such as, for example, Germany, the incidence drops to just under 0.3%.

Proportions similar to the Italian one can also be found in England, Spain and France; while a greater incidence occurs in Northern Europe, with peaks of up to 3%.

Even in the rest of the world, the distribution of celiac disease among the population varies from state to state.

In America, as in Australia, the percentage is always around 1%; in Mexico, things change a lot and it goes to more than double.

On the other hand, the incidence of the aforementioned pathology is medium low in Asian countries and very low in Japan, where the diagnosed cases are a small number.

A strictly gluten-free diet is the only effective treatment method against gluten intolerance. Celiacs can cover their nutrient needs with naturally gluten-free foods such as meat, fish, fruit, vegetables, eggs, milk, potatoes or rice and take in the missing nutrients with gluten-free dietary products and commercially available food supplements.

With regard to pastry products, there are cannolis on the market in which the wheat flour is entirely replaced with rice flour or corn starch; the mixture obtained, however, is qualitatively and organoleptically far from traditional wheat-based products.

In fact, the peculiarity of gluten is that it combines cohesion and elasticity to the dough in a product, giving structure for facilitate workability and give texture to the finished product.

Furthermore, in most cases the sensorial properties of gluten-free pastry products are reduced compared to products obtained with wheat flour as the main ingredient.

The absence of gluten in the doughs leads to the obtaining of non-workable liquid-viscous composites and pastry products, without structure.

For this reason, in order to obtain satisfactory properties in gluten-free pastry products, it is necessary to add numerous ingredients and thickening additives to the dough, of a chemical nature with a cross-linking and/or structuring effect.

The aforementioned additions are necessary to give consistency to the dough and, as a result, to the finished product, to compensate for the absence of gluten and the related thickening effects.

Pastry products developed for celiacs, therefore, are lacking in terms of natural authenticity, as the food substances have undergone an artificial alteration in their essence and in their normal composition, through the mixing of foreign substances or the subtraction of characteristic nutritional principles.

Furthermore, the mixtures thus obtained have reduced workability due to their high density.

It follows that it is particularly difficult to make flaky and thin sheets of pasta like that of traditional cannoli.

Even from a conservation point of view, the basic doughs obtained with such compositions have a reduced shelf life compared to traditional wheat flour-based products.

### • TECHNICAL PROBLEM TO BE SOLVED

In consideration of the state of the known art, the technical problem that the present invention aims to solve is that of producing a cialda based on dried fruit, preferably but not limited to the present invention, based on almonds, which allows get a cannolo naturally gluten-free.

The aim of the present invention is, therefore, to provide a gluten-free baked product which has satisfactory properties in terms of sensory qualities, taste, palatability and consistency and to improve a corresponding production method.

Another purpose is to provide a recipe whose ingredients, dosed in precise proportions, subjected to specific temperatures and the right amount of mechanical energy, create a dough with an optimal structure.

Another purpose is to obtain the aforementioned mixture without the aid of structuring and/or cross-linking chemical additives or thickeners.

Another purpose is to provide a gluten-free baked product that has a long shelf life without being attacked by bacteria, yeasts, molds, spores or microorganisms in general.

### · DISCLOSURE OF INVENTION

The applicant has conceived, tested and implemented the present invention to overcome the limitations of the state of the art and to obtain these and other purposes and advantages. Unless otherwise defined, all technical and scientific terms used herein and below have the same meaning as commonly understood by a person of ordinary skill in the art to which the present invention belongs. Although methods and ingredients similar or equivalent to those described herein may be used in the practice and experiments of the present invention, the methods and ingredients are described below by way of example. In the event of a conflict, this application, including its definitions, will prevail.

The invention in question, according to the claims, introduces a new recipe and the related production method of a cannolo of cialda based on dried fruit, composed of a mixture of ingredients such as: powdered glucose syrup, sugar, powdered vegetable fats, powdered milk, soy lecithin, powdered glucose syrup, combined with dried fruit (almonds or peanuts or hazelnuts or pistachios) which constitutes the primary ingredient.

Suitably, the weight quantity of dried fruit can be between 30% and 35% of the total weight; the predetermined weight quantity of glucose syrup powder is between 17% and 20% of the total weight; the predetermined weight quantity of sugar is between 25% and 30% of the total weight; the predetermined weight quantity of milk powder is between 1% and 1.5% of the total weight; the predetermined weight quantity of powdered vegetable fats is between 10% and 12% of the total weight; the predetermined weight quantity of soy lecithin powder is between 0.5% and 0.1% of the total weight.

The proportions between the various components vary in correlation with the type of dried fruit chosen.

By mixing the aforementioned ingredients in pre-established quantities, a dough is elaborated, from which, following a complex production process, the aforementioned cannoli are obtained.

### · BRIEF DESCRIPTION OF DRAWINGS

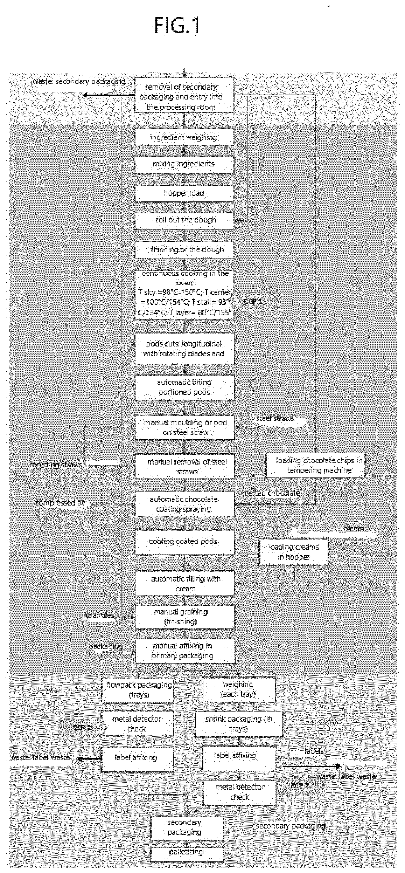

Figure 1: is a flow diagram of the product processing phases from the phase in which the ingredients are inserted into the production plant to the phase in which the goods are placed on pallets for loading or unloading operations, after being packaged.

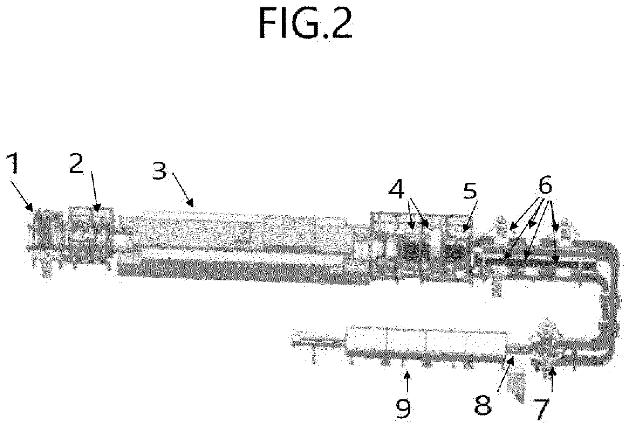

Figure 2: is a perspective view of a entire plant in which the different components are distinguished, each designed for a specific processing phase of the product, from the phase of mixing the ingredients to the packaging phase of the finished product, in progressive succession.
Figure 3: is a detail of the production process in which the hopper stands out.
Figure 4: is a portion of the system in which the hopper and the internal mechanism can be distinguished.

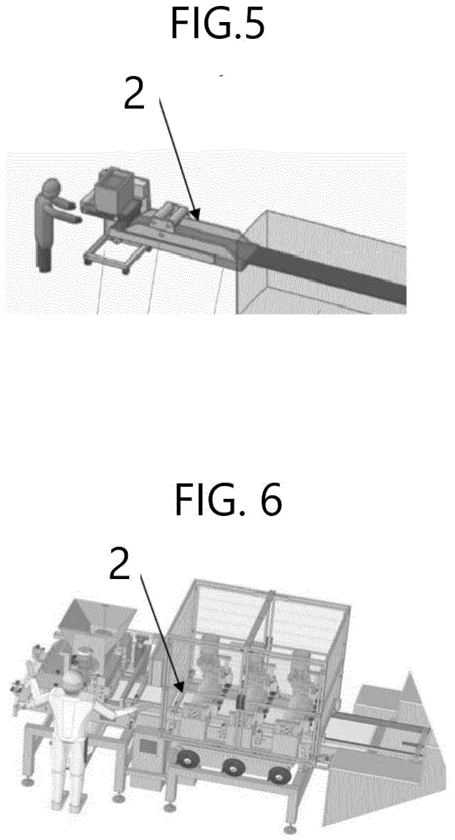

Figure 5: is a detail of the conveyor belt.
Figure 6: is a portion of the plant in which the conveyor belt can be seen seen from above.
Figure 7: is a detail of the tunnel oven.
Figure 8: is a portion of the system in which the tunnel oven stands out.
Figure 9: is a detail of the cutter with rotating and straight blades.
Figure 10: is a portion of the system in which the straight and rotating blades inside the system can be distinguished.
Figure 11: is a detail of the rotary star.
Figure 12: is a portion of the system in which the positioning of the rotary star can be distinguished. the stations where the operators proceed with the manual shaping of the cialda on the cylindrical moulds.
Figure 13: is a detail of the cialda wrapped in the cylindrical mould.
Figure 14: is a portion of the system in which the six stations for manual modeling on the molds are distinguished.
Figure 15: is a photograph showing the cooked cialda extracted from the cylindrical mould.
Figure 16: is a portion of the system in which the stations are distinguished where the operators manually extract the cannoli from the cialda.
Figure 17: is a photograph showing the cannoli during the chocolate spraying phase inside the cannoli.
Figure 18: is a portion of the system in which the positioning of the four spray guns on board the system can be distinguished.
Figure 19: is a entire plant in elevation showing the positioning of the cooling tunnel.
Figure 20: is a photograph showing the manual filling phase of the cannoli.
Figure 21: is a photograph of the cannoli packaged in food boxes.

### . DESCRIPTION OF AT LEAST ONE WAY OF CARRYING OUT THE INVENTION WITH

### REFERENCE TO THE DRAWINGS

The present invention will now be described purely illustrative and non-limiting, according to one embodiment preferred, also referring to the figures described which show the processing phases of the product, from mixing the ingredients to the packaging phase.

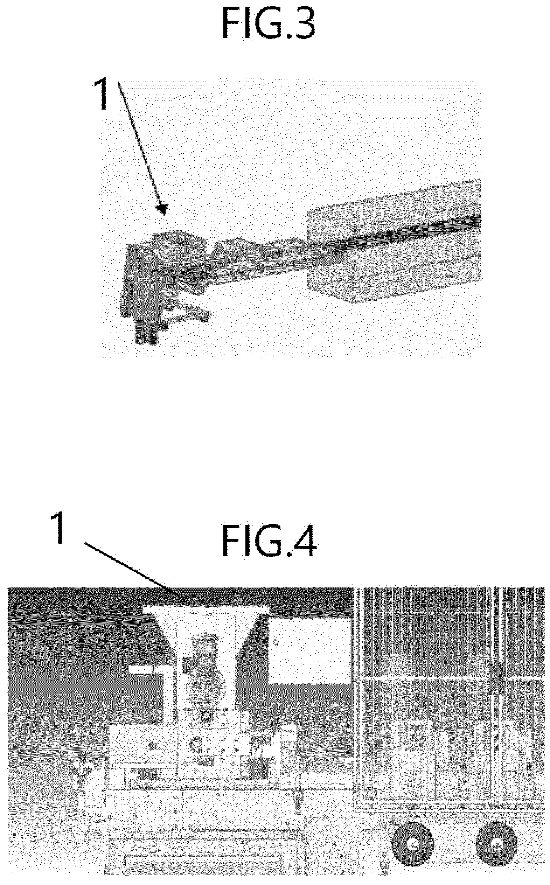

Specifically, we proceed following weighing and mixing of the ingredients, when loading them into the hopper 1 (Figg.3-4).

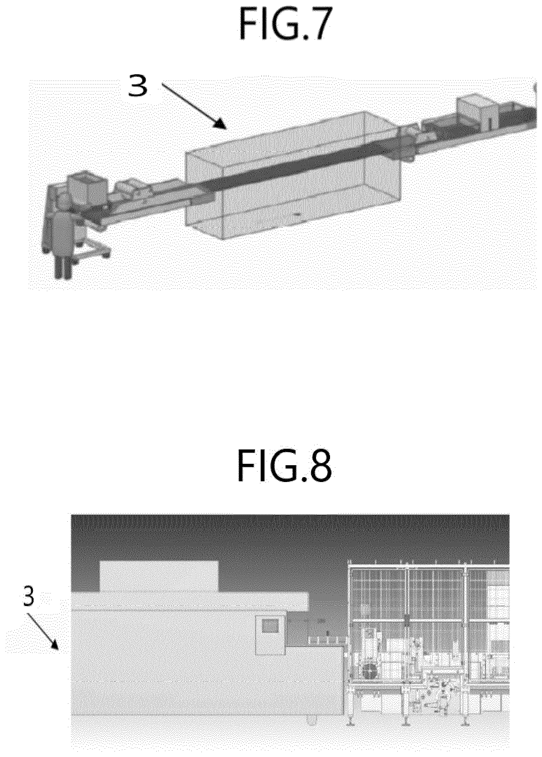

The mixture obtained is rolled out and thinned on a special conveyor belt 2 and taken to the tunnel oven 3 where it is cooked at a constant temperature equal to T sky = 98° C - 150° C; T center = 100°C/154°C; T floor = 93° C/134° C; T layers =80°C/155°C (Figg. 7-8).

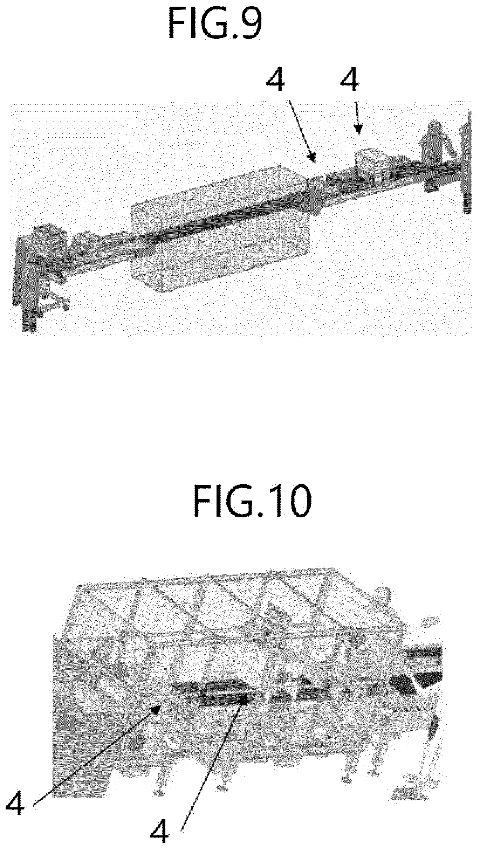

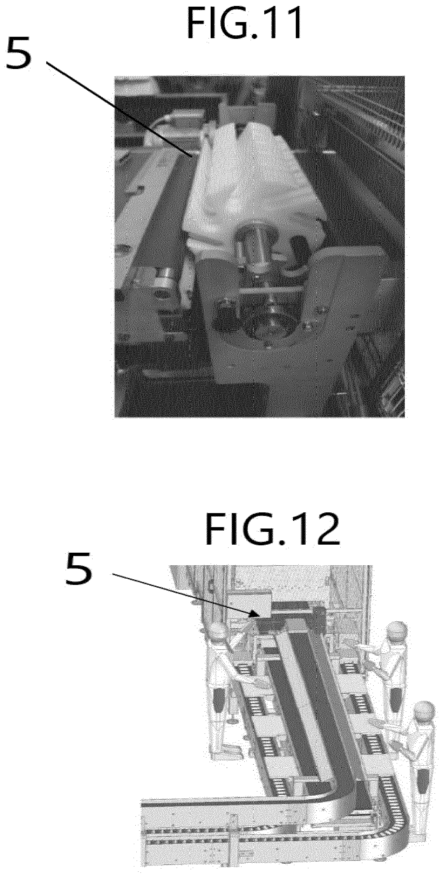

This is followed by sectioning of the cialda obtained transversely and longitudinally using straight rotating blades 4 and subsequent overturning of the cialda using a rotary star 5 (Figg. 9-10-11-12).

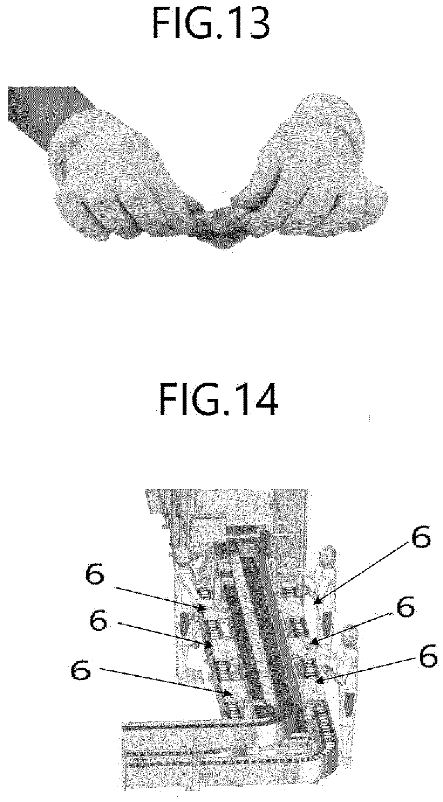

At this point the cialda portions, thus sectioned, are modeled manually on special cylindrical molds and then expelled from them, transformed into cannoli (Figg. 13-14-15).

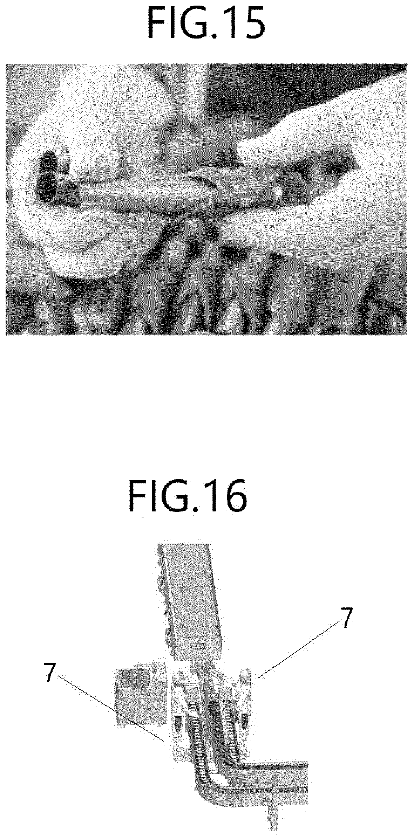

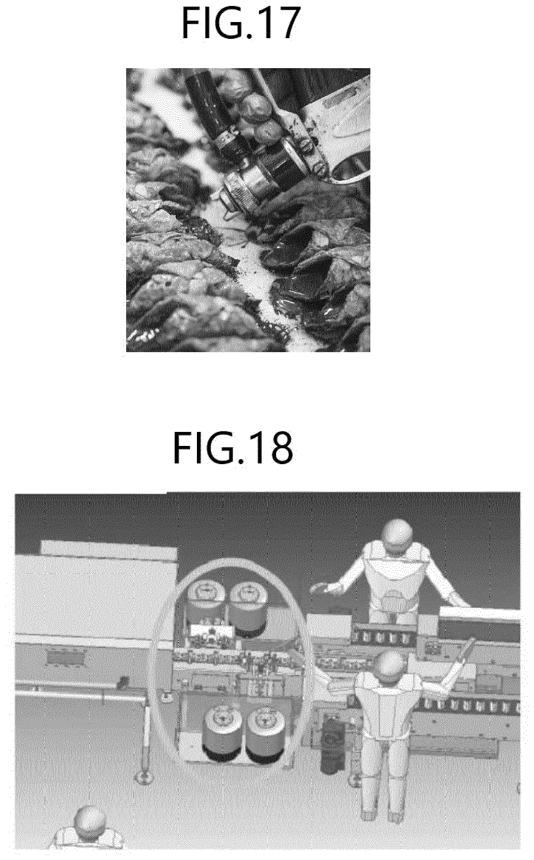

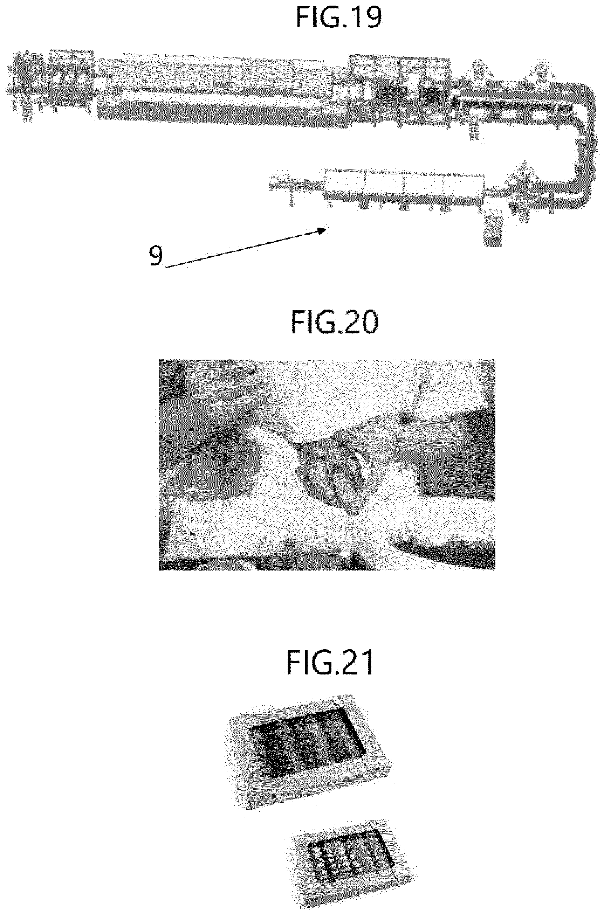

The aforementioned cannoli are placed on the conveyor belt 2 to be sprayed with chocolate 8, and finally left to cool and subsequently packaged and/or filled (Figg. 16-17-18-19-20-21).

This processing system guarantees minimum conservation of the final product for a period of approximately 10 (ten) months. From a technological point of view, a stable product is obtained, which can be configured as a "dry" product, whose percentage of water contained in it is equal to approximately 0.47%, i.e. almost non-existent, and therefore far from the risk of potential mold production.

The recipe and the related production method of the final product are susceptible to numerous modifications and variations of a practical nature.

application, all falling within the inventive concept expressed in the attached claims. All the details may be replaced by other technically equivalent elements and the ingredients may be different according to needs, without departing from the scope of protection of the present invention.

The object of the invention is susceptible to numerous modifications and variants of a practical-applicative nature, all falling within the inventive concept expressed in the claims alleged. All the details may be replaced by other technically equivalent elements, and the materials may be different according to the needs, without leaving the scope of protection of this invention.

Although if the object has been described with particular reference to the attached figures, the reference numbers used in the description and in the claims are used to improve the intelligence of the invention and do not constitute any limitation to the claimed scope of protection.

## Claims

1. Cannolo of cialda based on dried fruit and production method of said cannolo of cialda based on dried fruit, comprising the following ingredients:
- a predetermined weight quantity of dried fruit,
- a predetermined weight quantity of powdered glucose syrup,
- a predetermined weight quantity of sugar,
- a predetermined weight quantity of milk powder,
- a predetermined weight quantity of powdered vegetable fats,
- a predetermined weight quantity of soy lecithin,
wherein said weight quantity of dried fruit is between 30% and 35% of the total weight; wherein said predetermined weight quantity of powdered glucose syrup is between 17% and 20% of the total weight; wherein said predetermined weight quantity of sugar is between 25% and 30% of the total weight; wherein said predetermined weight quantity of milk powder is between 1% and 1.5% of the total weight; wherein said predetermined weight quantity of vegetable fats in powder is between 10% and 12% of the total weight; wherein said predetermined weight quantity of soya lecithin in powder is between 0.5% and 0.1% of the total weight, **characterized by** the fact that from the processing of said ingredients through said production method a naturally gluten free cannolo is obtained.

2. Cannolo of cialda based on dried fruit and production method of said cannolo of cialda based on dried fruit according to claim 1, wherein said predetermined weight quantity of dried fruit is chosen from almonds, peanuts, hazelnuts or pistachios.

3. Cannolo of cialda based on dried fruit and production method of said cannolo of cialda based on dried fruit according to claim 1, comprising mixing said predetermined weight quantity of dried fruit with said predetermined weight quantity of powdered glucose syrup with said weight quantity predetermined weight quantity of sugar, with said predetermined weight quantity of milk powder with said predetermined weight quantity of powdered vegetable fats with said predetermined weight quantity of soy lecithin.

4. Cannolo of cialda based on dried fruit and production method of said cannolo of cialda based on dried fruit according to claim 3, **characterized by** the fact that the mixing is carried out at a constant temperature between 98 °C and 160 °C.

5. Cannolo of cialda based on dried fruit and production method of said cannolo of cialda based on dried fruit according to claim 3, **characterized by** the fact that said ingredients are inserted into a hopper (1).

6. Cannolo of cialda based on dried fruit and production method of said cannolo of cialda based on dried fruit according to claim 3 and 5, **characterized by** the fact that the dough obtained after passing through said hopper (1) is spread on baking paper pulled on a conveyor belt (2).

7. Cannolo of cialda based on dried fruit production method of said cannolo of cialda based on dried fruit according to claim 1 and 6, **characterized by** the fact that said conveyor belt (2) s adjustable in order to establish the specific weight of each cannolo.

8. Cannolo of cialda based on dried fruit and production method of said cannolo of cialda based on dried fruit according to claim 1 and 6, **characterized in that** said dough after being spread on said conveyor belt (2) is cooked in a tunnel oven (3) and transformed into cialda.

9. Cannolo of cialda based on dried fruit and production method of said cannolo of cialda based on dried fruit according to claims 1 and 8, wherein the temperature of said tunnel oven (3) is constant and equal to T sky = 98 °C - 150°C; T center = 100°C/154°C; Floor T = 93°C/134°C; T layers =80°C/155°C.

10. Cannolo of cialda based on dried fruit and production method of said cannolo of cialda based on dried fruit according to claims 1 and 8, **characterized by** the fact that the dough after being cooked in said tunnel oven (3) is cut by blades straight and rotating (4) longitudinally and transversely.

11. Cannolo of cialda based on dried fruit and production method of said cannolo of cialda based on dried fruit according to claims 3 and 9, **characterized by** the fact that said pod based on dried fruit, after being cut by straight and rotating blades (4) in the longitudinal and transversal, is overturned using a rotary star (5) and then modeled manually on cylindrical molds.

12. Cannolo of cialda based on dried fruit and production method of said cannolo of cialda based on dried fruit according to claim 3 and 10, **characterized by** the fact that said cialda based on dried fruit, after being shaped on cylindrical molds and expelled from said molds, are transformed in cannoli.

13. Cannolo of cialda based on dried fruit and production method of said cannolo of cialda based on dried fruit according to claims 3 and 8, **characterized by** the fact that once said cannoli are formed, they are positioned on the conveyor belt (2) where they are subjected to spraying of the chocolate (8), to then be passed into the cooling tunnel (9) and subsequently filled and/or packaged.

## Amended claims

### Amended claims in accordance with Rule 137(2) EPC.

1. Cannolo gluten free obtained from a dough free sources of gluten, composed of:
- a predetermined weight quantity of dried fruit;
- a predetermined weight quantity of powdered glucose syrup;
- a predetermined weight quantity of sugar;
- a predetermined weight quantity of milk powder;
- a predetermined weight quantity of powdered vegetable fats;
- a predetermined weight quantity of soy lecithin,
wherein said weight quantity of dried fruit is between 30% and 35% of the total weight; wherein said predetermined weight quantity of powdered glucose syrup is between 17% and 20% of the total weight; wherein said predetermined weight quantity of sugar is between 25% and 30% of the total weight; wherein said predetermined weight quantity of milk powder is between 1% and 1.5% of the total weight; wherein said predetermined weight quantity of vegetable fats in powder is between 10% and 12% of the total weight; wherein said predetermined weight quantity of soya lecithin in powder is between 0.5% and 0.1% of the total weight, **characterized by** the fact that said cannolo gluten free by means of the sprinkling of chocolate that covers the internal walls of the cannolo and isolates it from any fitting.

2. Cannolo gluten free according to claim 1, wherein said predetermined weight quantity of dried fruit is chosen from almonds, peanuts, hazelnuts or pistachios.

3. Cannolo gluten free according to claim 1, wherein said dough free sources of gluten is composed of: said predetermined weight quantity of dried fruit, said predetermined weight quantity of powdered glucose syrup, said weight quantity predetermined weight quantity of sugar, said predetermined weight quantity of milk powder, said predetermined weight quantity of powdered vegetable fats, said predetermined weight quantity of soy lecithin, wherein said weight quantity of dried fruit is between 30% and 35% of the total weight; wherein said predetermined weight quantity of powdered glucose syrup is between 17% and 20% of the total weight; wherein said predetermined weight quantity of sugar is between 25% and 30% of the total weight; wherein said predetermined weight quantity of milk powder is between 1% and 1.5% of the total weight; wherein said predetermined weight quantity of vegetable fats in powder is between 10% and 12% of the total weight; wherein said predetermined weight quantity of soya lecithin in powder is between 0.5% and 0.1% of the total weight.

4. Cannolo gluten free according to claim 1 and 3, wherein the preparation of said gluten-free cannolo involves:
- mixing said quantity of dried fruit with said predetermined quantity of powdered glucose syrup with said predetermined quantity of sugar with said predetermined quantity of powdered milk with said predetermined quantity of powdered vegetable fat and with said predetermined quantity of soy lecithin;
- forming discs of dough;
- cooking said discs of dough.

5. Cannolo gluten free according to claim 1,3 and 4, wherein said preparation providing that the mixing of said quantity of dried fruit and said quantity of powdered glucose syrup and said quantity of sugar and said quantity of powdered milk and said quantity of powdered vegetable fats and said quantity of soy lecithin is carried out at a constant temperature between 98 ° C and 160 ° C.

6. Cannolo gluten free according to claim 1, 3, and 5, wherein said preparation provides that said dough discs are cooked in a oven at a constant temperature equal to T top = 98° C - 150° C; T center = 100° C/154° C; T floor = 93° C/134° C; T layers =80° C/155° C.

7. Cannolo gluten free according to claim 1, 3, 4, 5, and 6, where said dough discs are manually shaped on cylindrical moulds after baking in the oven.

8. Cannolo gluten free according to claims 1, 3, 4, 5, 6 and 7, **characterized in that** said dough discs after being expelled from said cylindrical moulds are sprayed inside with chocolate.
